(19) Europäisches Patentamt / European Patent Office / Office européen des brevets

(11) **EP 2 828 622 B1**

(12) **EUROPEAN PATENT SPECIFICATION**

(45) Date of publication and mention of the grant of the patent:
**17.07.2019 Bulletin 2019/29**

(51) Int Cl.:
***G01D 5/353*** *(2006.01)*

(21) Application number: **13711342.9**

(22) Date of filing: **19.03.2013**

(86) International application number:
**PCT/EP2013/055677**

(87) International publication number:
**WO 2013/139783 (26.09.2013 Gazette 2013/39)**

(54) **A SENSOR FOR COMBINED TEMPERATURE, PRESSURE, AND REFRACTIVE INDEX DETECTION**

SENSOR FÜR KOMBINIERTE TEMPERATUR-, DRUCK- UND BRECHUNGSINDEXERFASSUNG

CAPTEUR POUR LA DÉTECTION ASSOCIÉE D'UNE TEMPÉRATURE, D'UNE PRESSION, ET D'UN INDICE DE RÉFRACTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.03.2012 IE 20120148**

(43) Date of publication of application:
**28.01.2015 Bulletin 2015/05**

(73) Proprietor: **University of Limerick**
**Limerick (IE)**

(72) Inventors:
 • **REINSCH, Thomas**
 **14467 Potsdam (DE)**
 • **BREMER, Kort**
 **29640 Schneverdingen (DE)**
 • **LEWIS, Elfed**
 **County Clare (IE)**
 • **LEEN, Gabriel**
 **Cork (IE)**
 • **LOCHMANN, Steffen**
 **15827 Dahlewitz (DE)**

(74) Representative: **Murgitroyd & Company**
**Scotland House**
**165-169 Scotland Street**
**Glasgow G5 8PL (GB)**

(56) References cited:
 • C. GOUVEIA ET AL: "Fabry-Pérot Cavity Based on a High-Birefringent Fiber Bragg Grating for Refractive Index and Temperature Measurement", IEEE SENSORS JOURNAL, vol. 12, no. 1, 24 January 2012 (2012-01-24), pages 17-21, XP055066833, ISSN: 1530-437X, DOI: 10.1109/JSEN.2011.2107898
 • ZENG XIANG-KAI ET AL: "Simultaneous Static Strain, Temperature and Vibration Measurement Using an Integrated FBG/EFPI Sensor", CHINESE PHYSICS LETTERS, vol. 18, no. 12, 1 December 2001 (2001-12-01), pages 1617-1619, XP055066424, ISSN: 0256-307X, DOI: 10.1088/0256-307X/18/12/323
 • HYUN-KYU KANG ET AL: "Simultaneous monitoring of strain and temperature during and after cure of unsymmetric composite laminate using fibre-optic sensors; Simultaneous monitoring of strain and temperature of composite laminate using fibre-optic sensors", SMART MATERIALS AND STRUCTURES, IOP PUBLISHING LTD., BRISTOL, GB, vol. 12, no. 1, 1 February 2003 (2003-02-01), pages 29-35, XP020071708, ISSN: 0964-1726, DOI: 10.1088/0964-1726/12/1/304

**Description**

INTRODUCTION

Field of the Invention

The invention relates to sensors having optical fibres in which there is monitoring of reflected light to indicate a parameter.

Prior Art Discussion

Fibre optic sensors have been reported to measure only refractive index (RI) (e.g. [1 - 11]) or simultaneous RI and temperature (e.g. [12 - 17]).

[1] Y. Rao, "In-Line Fiber-Optic Fabry-Perot Refractive-Index Tip Sensors", Proc. of SPIE Vol. 7133, 71332K, 2009.
[2] Z. Ran, Y. Rao, J. Zhang, Z. Liu and B. Xu, "A Miniature Fiber-Optic Refractive-Index Sensor Based on Laser-Machined Fabry-Perot Interferometer Tip", JOURNAL OF LIGHTWAVE TECHNOLOGY, VOL. 27, pp. 5426-5429, 2009
[3] H.J. Patrick, A.D. Kersey and F. Bucholtz, "Analysis of the Response of Long Period Fiber Gratings to External Index of Refraction", JOURNAL OF LIGHTWAVE TECHNOLOGY, VOL. 16, pp. 1606-1612, 1998.
[4] Y. Jung, S. Kim, D. Lee and K. Oh, "Compact three segmented multimode fibre modal interferometer for high sensitivity refractive-index measurement", MEASUREMENT SCIENCE AND TECHNOLOGY, vol. 17, pp. 1129-1133, 2006.
[5] J.-H. Chen, J.-R. Zhao, X.-. Huang and Z.-J. Huang, "Extrinsic fiber-optic Fabry-Perot interferometer sensor for refractive index measurement of optical glass", APPLIED OPTICS, Vol. 49, pp. 5592-5596, 2010.
[6] D.L. Goullon and K. Goswami, "Fiber optic refractive index sensor using a metal clad", US patent 4,929,049, 1990.
[7] J.-R. Zhao, X.-G. Huang, W.-X. He and J.-H. Chen, "High-Resolution and Temperature-Insensitive Fiber Optic Refractive Index Sensor Based on Fresnel Reflection Modulated by Fabry-Perot Interference", JOURNAL OF LIGHTWAVE TECHNOLOGY, VOL. 28, pp. 2799-2803 2010.
[8] D. Monzon-Hernandez and J. Villatoro, "High-resolution refractive index sensing by means of a multiple-peak surface plasmon resonance optical fiber sensor", Sensors and Actuators B, vol. 115, pp. 227-231, 2006.
[9] W. Liang, Y. Huang, Y. Xu, R. K. Lee and A. Yariv, "Highly sensitive fiber Bragg grating refractive index sensors", APPLIED PHYSICS LETTERS, vol. 86, pp. 151122.1-151122.3,2005.
[10] W. Chang Wong, C.C. Chan, L.H. Chen, Z.Q. Tou and K.C. Leong, "Highly sensitive miniature photonic crystal fiber refractive index sensor based on mode field excitation", OPTICS LETTERS, vol. 36, pp. 1731-1733, 2011.
[11] R. Jha, J. Villatoro and G. Badenes, "Ultrastable in reflection photonic crystal fiber modal interferometer for accurate refractive index sensing", APPLIED PHYSICS LETTERS, vol. 93, pp. 191106.1-191106.3, 2008.
[12] V. Bhatia, "Applications of long-period gratings to single and multi-parameter sensing", OPTICS EXPRESS, Vol. 4, pp. 457-466, 1999.
[13] H.Y. Choi, G. Mudhana, K. S. Park, U. Paek and B.H. Lee, "Cross-talk free and ultra-compact fiber optic sensor for simultaneous measurement of temperature and refractive index", OPTICS EXPRESS, vol. 18, pp. 141-149, 2009.
[14] C.R. Liao, Y. Wang, D.N. Wang and M.W. Yang, "Fiber In-Line Mach-Zehnder Interferometer Embedded in FBG for Simultaneous Refractive Index and Temperature Measurement", IEEE PHOTONICS TECHNOLOGY LETTERS, VOL. 22, pp. 1686-1688,2010.
[15] C. Zhao, X. Yang, M. Demokan and W. Jin, "Simultaneous Temperature and Refractive Index Measurements Using a 3° Slanted Multimode Fiber Bragg Grating", JOURNAL OF LIGHTWAVE TECHNOLOGY, VOL. 24, pp. 879-883, 2006.
[16] D.W. Kim, F. Shen, X. Chen and Anbo Wang, "Simultaneous measurement of refractive index and temperature based on a reflection-mode long-period grating and an intrinsic Fabry-Perot interferometer sensor", OPTICS LETTERS, Vol. 30, pp. 3000-3002, 2005.
[17] B.A.L. Gwandu, X. Shu, T.D.P. Allsop, W. Zhang, L. Zhang, D.J. Webb and I. Bennion, "Simultaneous refractive index and temperature measurement using a cascaded long-period grating device", Proc. of IEEE Sensors 2002, pp. 1032 - 1035, 2002.
[18] A.D. Kersey et al, "Fiber Grating Sensors", J. Lightw. Technol., vol. 15, pp. 1442-1463, 1997.
[19] D. Schulz (2001), "Beschreibung und Auswertungsmethodik von Multi-Fabry-Perot-Systemen", unpublished thesis (PhD), Gerhard-Mercator-Universität Duisburg
[20] J. Xu, X. Wang, K.L Cooper, G.R. Pickrell, and A. Wang, "Miniature fiber optic pressure and temperature sensors", Fiber Optic Sensors Technology and Applications IV, Proc. of SPIE vol. 6004, 2005.

[21] Y. Zhu and A. Wang, "Miniature Fiber-Optic Pressure Sensor", IEEE Photonics Technology Letters, vol. 17, pp. 447-449, 2005.
[22] K.K. Chin et al., "Interference of Fiber-Coupled Gaussian Beam Multiply Reflected Between Two Planar Interfaces", IEEE Photonics Technology Letters, vol. 19, pp. 1643-1645, 2007.
[23] E. Cibula et al, "Miniature fiber optic pressure sensor for medical application", IEEE Sensors, Orlando, FL, USA 2002, pp. 711-714.
[24] D. Marcuse, "Loss analysis of single-mode fiber splices," Bell Syst. Tech. J., vol. 56, pp. 703-718, May/Jun. 1977.
[25] A. Majumdar and H. Huang, "Development of an in-fiber white-light interferometric distance sensor for absolute measurement of arbitrary small distances", Applied Optics, vol. 47, pp. 2821-2828, 2008.

Prior art documents which describe approaches to use of optical fibres for sensors are:

1. Bremer K et al: "Fibre optic pressure and temperature sensor for geothermal wells", Sensors, 2010 IEEE, IEEE, Piscataway, NJ, USA, 1 November 2010 (2010-11-01), pages 538-541

2. DE4125036 C1 (Dornier GmbH)

3. WO2011/120147 A1 (Univ Victoria Innovat Dev [CA]; Wild Peter Martin [CA]; Dennison Chris)

4. CN202041465 U (Univ Harbin Eng)

5. Rao Y J et al: "In-line fiber Fabry-Perot refractive-index tip sensor based on endlessly photonic crystal fiber", Sensors and Actuators A, Elsevier Sequoia S.A., Lausanne, CH, Vol. 148, No. 1, 4 November 2008 (2008-11-04), pages 33-38

The invention is directed towards providing a sensor which is more versatile.

SUMMARY OF THE INVENTION

According to the invention, there is provided a sensor comprising a light conductor having a single mode fibre Bragg grating, a cavity, a transparent cavity end with a coating thereon, a light emitter for directing light through the conductor, a light detector for detecting reflected light and a processor, as defined in claim 1.

In one embodiment, the processor is adapted to use at least one output to compensate another.

In one embodiment, pressure and temperature are used to compensate for variation in refractive index.

In one embodiment, the light conductor is an optical fibre. Preferably, the cavity is formed by a cylindrical glass structure at the end of the fibre. In one embodiment, the glass structure is a capillary.

In one embodiment, the cavity end wall is formed by a glass diaphragm or fibre section. In one embodiment, the processor is adapted to perform low-pass filtering to quantify light reflected back from the end of the cavity. In one embodiment, the processor is adapted to use said data to estimate cavity length, and to in turn use this to determine pressure.

In one embodiment, the processor is adapted to perform band-pass filtering to quantify light reflected back from the outside surface of the cavity wall. In one embodiment, the processor is adapted to use said data to estimate refractive index, and to in turn use said estimation to determine properties of the medium outside said cavity end wall.

In one embodiment, the processor is adapted to use a normalised band pass fringe visibility function to compensate for variations in refractive index arising from light source variations.

In one embodiment, the processor is adapted to determine data concerning a fluid external to the cavity wall which includes water, and/or oil and/or a gas.

In one embodiment, the processor is adapted to derive information from light reflected back from the outside surface of the cavity wall.

In one embodiment, the light conductor is completely composed of fused silica.

In one embodiment, the processor is adapted to compensate for light losses within the light conductor due to beam divergence.

Preferably, the grating is a single mode fibre Bragg grating

DETAILED DESCRIPTION OF THE INVENTION

Brief Description of the Drawings

The invention will be more clearly understood from the following description of some embodiments thereof, given by way of example only with reference to the accompanying drawings in which:-

Fig. 1 is a diagrammatic cross-sectional view of a sensor of the invention, and Fig. 2 illustrates its manufacture;

Fig. 3 shows an experimental set-up interrogation system;

Fig. 4 shows simplified signal processing functions to provide outputs indicating temperature, pressure and refractive index of a fluid, this processing chain does not consider Gaussian beam divergence in the EFPI (Extrinsic Fabry-Perot Interferometer) cavity;

Figs. 5 to 9 are plots illustrating sensed parameters;

Fig. 10 shows enhanced signal processing to provide outputs indicating temperature, pressure and refractive index of a fluid; and

Fig. 11 shows a simulation of the cross-sensitivity of the RI sensor to air cavity length changes.

Description of the Embodiments

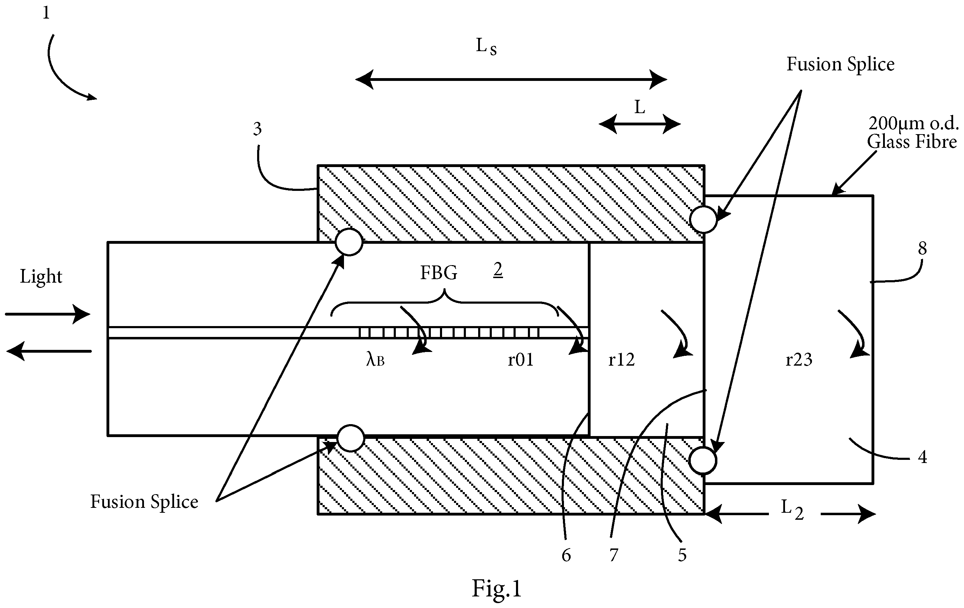

A schematic of a fibre optic pressure and temperature sensor 1 of the invention is illustrated in Fig. 1. The fibre optic sensor 1 was fabricated by using a Single Mode (SM) Fibre Bragg Grating (FBG) 2, a silica glass capillary 3 of length Ls and a 200μm OD silica glass fibre 4 of length L2. There is an air cavity 5 of length L1 between the end of the FBG fibre 2 and the 200μm OD fibre 4. There are therefore glass-air and air-glass interfaces at the edges of the cavity 5. The left hand cavity interface is given the numeral 6, the right hand cavity interface the numeral 7, and the end face of the 200μm fibre 4 is given the numeral 8. There are therefore three main interfaces: an interface 6 with reflection r01, an interface 7 with reflection r12, and an interface 8 with reflection r23.

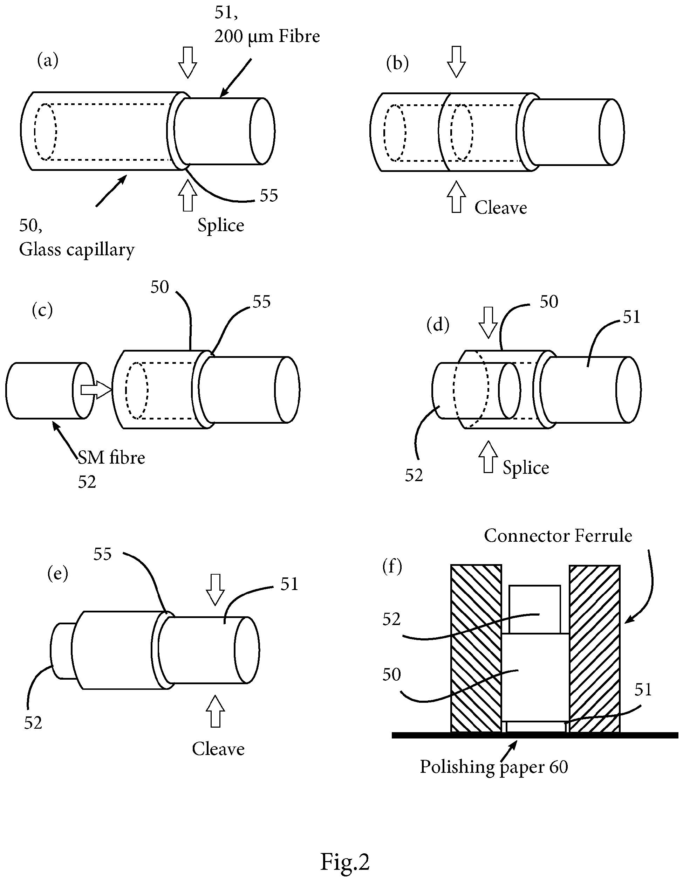

As shown in Fig. 2, initially (a) a glass capillary 50 was spliced to the 200μm fibre 51 to provide a cavity end wall or diaphragm. Step (b) is the cleaving of the capillary 50 to the desired length. Following this, an SM fibre 52, which contains a FBG (Fibre Bragg Grating) was inserted ((c) and (d)) into the glass capillary 50 and both the silica glass components were also fused. Thereafter the 200μm fibre was cleaved (e) several hundred microns from the glass capillary/200μm fibre splice 55. This cleave may be closer than several hundred micron if suitable equipment is used. The next step (f), which is optional and dependent on the quality of the cleave and the desired length of the 200μm fibre 51, involved polishing the 200μm fibre 51, using polishing paper 60, to the desired length in order to make a diaphragm. In addition to polishing the 200μm fibre 51 to the desired length, the 200μm fibre 51 may also be etched using Hydrofluoric acid (HF), in order to reduce the thickness of the 200μm fibre 51, in order to increase the sensitivity of the pressure sensing element. In an alternative embodiment, instead of using a 200μm fibre, another SM (Single Mode) fibre could be inserted into the capillary 50.

The interface 8 may in use be with a medium including a gas, a liquid, or a solid. In the example of a solid it may be used in a precipitation process.

As shown in Fig. 1, incident light propagating to the sensor head is reflected at the FBG 2 for a wavelength equal to the Bragg wavelength $\lambda_B$, which is defined as [18]:

$$\lambda_B = 2n_{eff}\Lambda \tag{1}$$

where $n_{eff}$ is the refractive index of the core material and $\Lambda$ is the period of the grating. All other wavelengths propagate in normal matter through the fibre and are reflected at the glass/air interface of the SM fibre and at the air/glass as well as the glass/fluid interfaces of the 200μm fibre. Both reflections transmit back into the SM fibre and generate light interference. The light interference can be described as [21]:

$$\frac{I(\lambda, L_1)}{I_0} = A_{01}^2 + A_{12}^2 + A_{23}^2 - 2A_{01}A_{12}\cos\left(\frac{4\pi L_1}{\lambda}\right)$$
$$+ 2A_{01}A_{23}\cos\left(\frac{4\pi(L_1 + n_2 L_2)}{\lambda}\right) - 2A_{12}A_{23}\cos\left(\frac{4\pi n_2 L_2}{\lambda}\right) \tag{2}$$

where $A_{01}$, $A_{12}$ and $A_{23}$ are the amplitudes of the reflected light $I_{R01}$, $I_{R12}$ and $I_{R23}$. $n_2$ is the refractive index of the silica glass fiber, $L_1$ is the length of the air cavity 5 between the FBG-SM fibre 2 end face 6 and inner surface 7 of the 200μm glass fiber, $L_2$ is the length of the 200μm fibre 4 and $\lambda$ is the optical wavelength. In Equation 2 the first and second cosine term describe the interference between the FBG-SM fibre 2 endface 6 and the inner 7 as well as outer 8 200μm glass

fiber 4 surfaces. The third cosine term is the interference between the inner 7 and outer 8 surfaces of the 200$\mu$m fibre 4. Furthermore, light losses within the air cavity 5 occur due to Gaussian beam divergence [22]. For a weakly guided step-index SM fibre, the fundamental $HE_{11}$ mode can be accurately approximated by a Gaussian distribution of a transverse and linearly polarised electric field [22]. As soon as the Gaussian beam propagates through the air cavity 5, its diameter increases and both the power density and the coupling coefficient decreases, which can be associated with losses within the cavity. The coupling coefficient $\eta$ can be expressed as a function of longitudinal displacement as [23]:

$$\eta(L_1) = \frac{2w_0 w(L_1)}{w_0^2 + w^2(L_1)} , \qquad (3)$$

where

$$w^2(L_1) = w_0^2 \left[ 1 + \left( \frac{\lambda}{\pi w_0^2} 2L_1 \right)^2 \right] . \qquad (4)$$

Equation 4 describes the Gaussian beam radius after crossing the length $L_1$ of the EFPI air cavity 5. $w_0$ expresses the reference or mode field radius which can be calculated as [24]:

$$\frac{w_0}{b} = 0.65 + \frac{1.619}{V^{3/2}} + \frac{2.879}{V^6} . \qquad (5)$$

In Equation 5, b is the fibre core radius and V represents the normalised frequency. Therefore the amplitudes $A_{01}$, $A_{12}$ and $A_{23}$ can be calculated as:

$$A_{01} = r_{01} , \qquad (6)$$

$$A_{12} = \eta \cdot T \cdot r_{12} , \qquad (7)$$

$$A_{23} = \eta \cdot T^2 \cdot r_{23} , \qquad (8)$$

where $r_{01}$ and $r_{12}$ are the reflectivity coefficients of the glass/air 6 and air/glass 7 interfaces of the first air cavity 5. $\eta$, and $T$ are the coupling coefficient of the air cavity and the transmission of the glass/air interface 6. The coupling coefficient of the glass cavity (200$\mu$m fibre) has been neglected. The reflectivity coefficient $r_{23}$ of the interface 8 between the refractive index of the 200$\mu$m glass fibre $n_{glass}$ and the surrounding medium $n_{fluid}$ can be calculated as [19]:

$$r_{23} = \frac{n_{glass} - n_{fluid}}{n_{glass} + n_{fluid}} . \qquad (9)$$

Furthermore, when pressure is applied to the fibre optic sensor 1, the glass capillary 3 deforms and hence changes the EFPI cavity length $L_1$. The sensitivity of the sensor 1 ($S_P$) and hence the cavity length change $\Delta L_P$ due to applied pressure $\Delta P$ can be expressed as [20]:

$$\Delta L_P = \frac{L_s r_o^2}{E\left(r_o^2 - r_i^2\right)} \left(1 - 2\mu\right)\Delta P = S_P \Delta P \qquad (10)$$

where $\mu$ is the Poisson's ratio of the glass capillary 3, $E$ is the Young's modulus, $L_S$ is the effective length of the pressure sensor, $r_i$ and $r_o$ are the inner and outer radius of the glass capillary 3.
In addition, due to the thermal expansion of all glass components, the EFPI cavity 5 is also sensitive to temperature. The change of the EFPI cavity length $\Delta L_T$ as a result of temperature can be calculated as [20]:

$$\Delta L_T = \left[(\alpha_C - \alpha_F)L_S + \alpha_F L_1 + \frac{P}{T}S_P\right]\Delta T \qquad (11)$$

In Equation 11 $\alpha_C$ and $\alpha_F$ are the Coefficients of Thermal Expansion (CTE) of the glass capillary 3 and the SM fibre 2.

The shift of the Bragg wavelength due to temperature can be expressed as [18]:

$$\Delta \lambda_{B,T} = \lambda_B \left(\alpha_S + \frac{1}{n_{eff}}\frac{dn_{eff}}{dT}\right)\Delta T \qquad (12)$$

where $dn_{eff}/dT$ is the thermo- optic coefficient.

Experimental Set-up

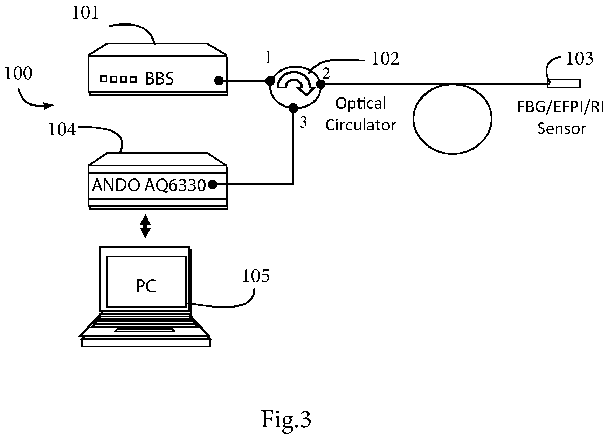

The fibre optic sensor was interrogated using an interrogation system 100 shown in Fig. 3. The interrogation system 100 consists of a Broad-Band Source (BBS) 101, an optical circulator 102 and an Optical Spectrum Analyser (OSA). Light from the BBS 101 is guided through the optical circulator 102 to the sensor and is reflected at the sensor head 103 back to the optical circulator 102 again. From the optical circulator 102 the reflected spectrum of the fibre optic sensor 103 is transferred to the OSA 104. The OSA 104 captures and normalises the reflected spectrum of the fibre optic sensor 103. A computer 105 is used to acquire and analyse the spectrum from the OSA 104.

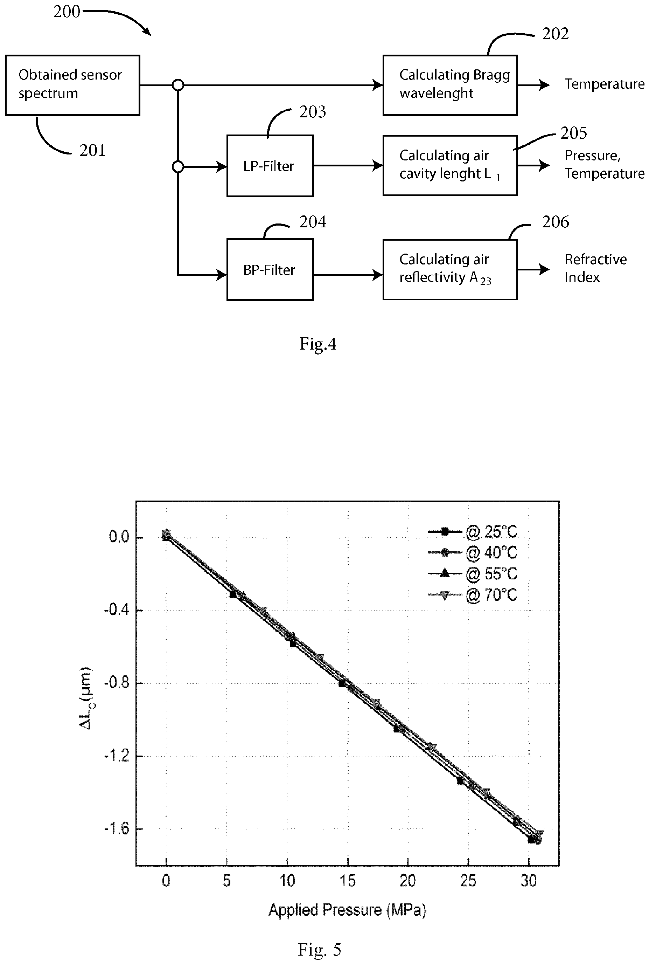

In order to obtain the RI at the outer surface of the 200 $\mu$m fibre and the applied pressure and temperature, the signal processing 200 as displayed in Fig. 4 was applied.

The change of the temperature was determined directly from the obtained spectrum (201) by tracing (202) the Bragg wavelength. In contrast, the air cavity length change of the EFPI and the change of the RI at the outer surface of the 200 $\mu$m fibre were determined by filtering (203, 204) the obtained spectrum using a Low Pass (LP) and a Band Pass (BP) filter respectively. The cut-off frequency of the LP filter was set so that only the DC and the first cosine term in Equation 2 passed through the filter. In contrast, the cut-off frequencies of the BP filter were set so that only the third cosine term in Equation 2 passed through the filter.

The air cavity length 5 and hence the pressure and temperature information from the EFPI can be calculated (205) from the LP filtered spectrum using e.g. the following equation [25]:

$$L = \frac{\Delta \varphi \cdot \lambda_1 \lambda_2}{4\pi(\lambda_2 - \lambda_1)} \qquad (13)$$

where $\lambda_1$ and $\lambda_2$ are two wavelengths that are $\Delta\varphi$ out of phase in the LP filtered spectrum.

The processing chain quantifies light reflected from a coating on the outer surface of the cavity wall 8 (the 200 $\mu$m OD fibre), and processes (206) said data to determine an indication of refractive index of a fluid or solid medium outside said cavity wall. The change of the RI at the outer surface of the 200 $\mu$m fibre is determined by analysing the amplitude of the BP filtered spectrum. One example would be the calculating the fringe visibility. The fringe visibility is defined as [19]:

$$\gamma = \frac{I_{max} - I_{min}}{I_{max} + I_{min}} \qquad (14)$$

where $I_{max}$ and $I_{min}$ are the maximum and minimum intensities of the optical interference, e.g. adjacent peak and valley points of the BP filtered spectrum.

Experiments

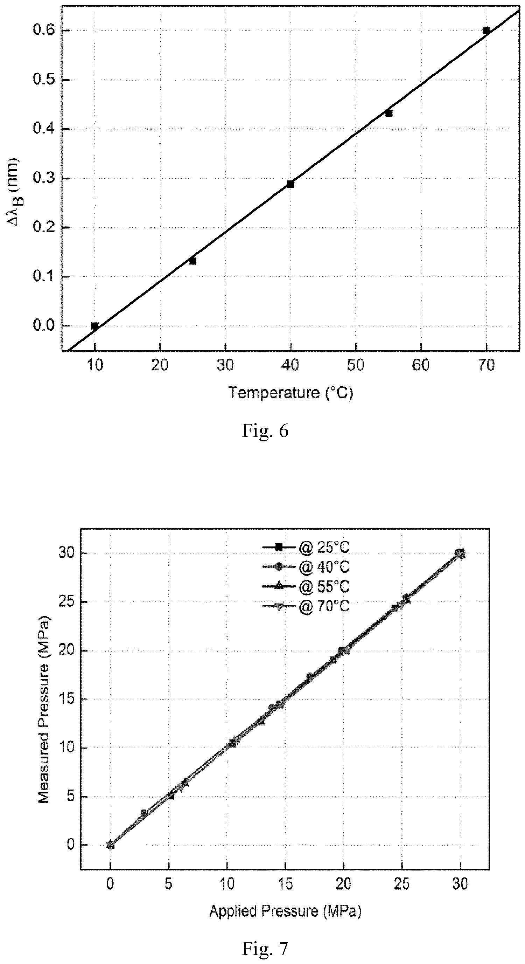

Initially, the ability of the sensor was verified for measuring pressure and temperature simultaneously. For this, the pressure and temperature response of the fibre optic sensor were evaluated by measuring pressure at different temperatures. Pressure experiments were started at ambient pressure (labelled with 0MPa) and increased incrementally to 30MPa for four different temperatures (25°C, 40°C, 55°C and 70°C). The temperature was kept constant during each pressure experiment. The change of the EFPI cavity 5 length due to applied pressure and temperature are shown in Fig. 5. As shown in Fig. 5, the EFPI cavity 5 shows a good linear correlation to applied pressure. Moreover, the temperature sensitivity is much smaller compared to the pressure sensitivity. Thus, for a relatively small temperature range, the cross-sensitivity of the EFPI cavity to temperature can be neglected. In Fig. 6, the temperature response of the FBG sensor is illustrated. The measured temperature response and sensitivity of the FBG sensor are consistent with those reported in literature, see e.g. [8]. Using the temperature information from the FBG the temperature cross-sensitivity of the EFPI can be compensated and the applied pressure can be calculated as depicted in Fig. 7.

Following this, the ability to measure RI at different temperatures of the fibre optic sensor was verified. In this analysis, five different sodium chloride solutions were prepared. In Table 1 the concentrations of the five different sodium chloride solutions are illustrated. They were measured using a FRI Refractive Index Sensor from FISO Technologies Inc.

Table 1: Concentrations of sodium chloride solutions

| mol/l | 0 | 1 | 2 | 3 | 4 |
|---|---|---|---|---|---|
| g/10ml | 0 | 0.5835 | 1.668 | 1.7505 | 2.3338 |

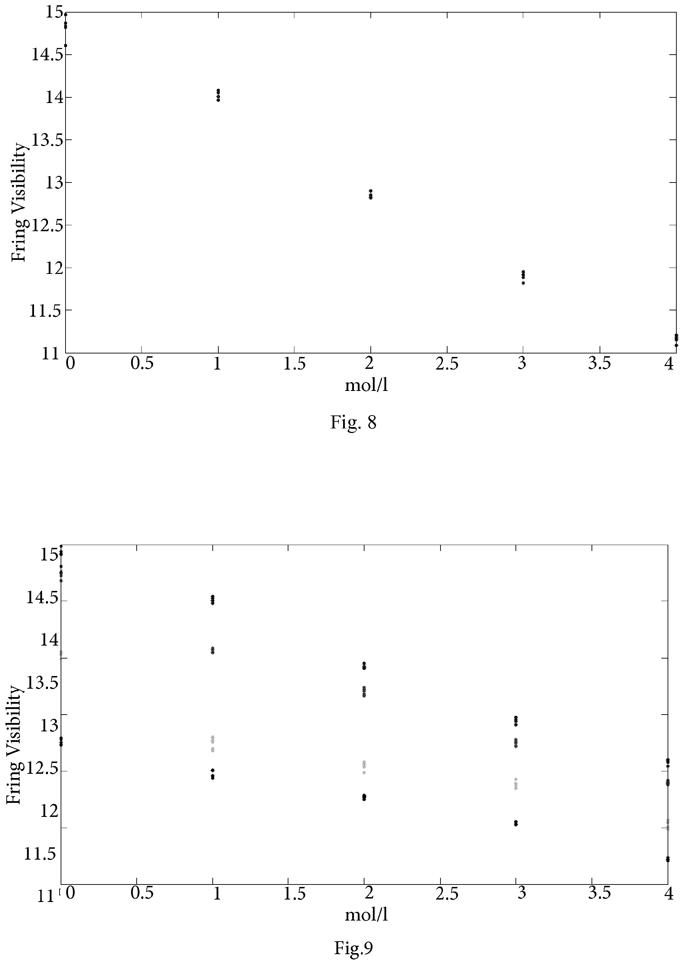

The change of the RI was measured by calculating the change of the amplitude of the third cosine term in Equation 2 using the fringe visibility. In Fig. 8 the result is displayed at 20°C.

As shown in Fig. 8, the fibre optic sensor was able to measure the change of the RI. Moreover, a good linear response was obtained between the measured fringe visibility and the measured RI. Following this, the RI response of the fibre optic sensor was evaluated at four different temperatures (20°C - top dots, 40°C - second from top dots, 60°C - third from top dots and 80°C - bottom dots) and the change of the fringe visibility is illustrated in Fig. 9.

As shown in Fig. 9, the fibre optic sensor was able to measure the RI at different temperatures. the RI of the sodium chloride solution changes at different temperatures, leading to a change in the fringe visibility. Using the temperature information and a signal processing method the temperature cross-sensitivity can be compensated.

The fibre optic sensor can also be applied to measure low pressure in one example. The pressure range depends only on the diaphragm thickness. However, in other uses a wide variety from very low to very high pressure sensitivities can be achieved due to changes of the diaphragm thickness.

Measuring refractive index at the tip of the fibre sensor is just one example of a measurement which can be inferred. The invention can also be applied to measure other parameters simultaneously with pressure and temperature; e.g. hydrogen detection or some other phenomena which changes the optical properties at the end face 8. For H detection, for example, a hydrogen-sensitive coating could be sputtered at fibre end face 8. When exposed to hydrogen, the coating changes its reflectance and hence the fringe visibility of the BP filtered spectrum (e.g. http://www.materion-gmbh.de/ provides such coatings).

The 200μm glass fibre can be replaced by a SM fibre. In this case, instead of splicing the 200μm fibre at the end face of the glass capillary, the SM fibre may be inserted into the glass capillary.

Depending on the pressure range and resolution, the dimension of the glass capillary can be changed. Apart from the diaphragm, the capillary deforms as well. Instead of splicing a diaphragm to the capillary, a piece of a SM fibre can be spliced into the capillary to create an air cavity. Applying pressure the capillary deforms (not the diaphragm/fibre) to give a signal.

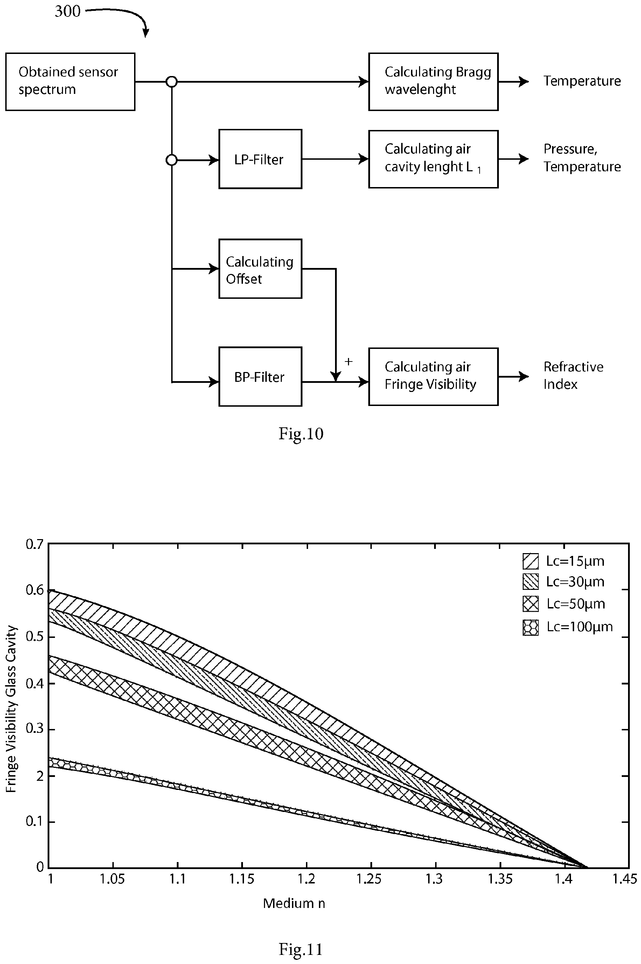

The signal processing method 200 shown in Fig. 4 may be used to determine temperature, pressure and an approximate value for refractive index. An enhanced signal processing method 300 is shown in Fig. 10, in which the DC part of the sensor spectrum is added to the BP filtered signal. Form this enhancement the fringe visibility in Equation 14 can be rewritten using Equation 2 as:

$$\gamma = \frac{2 A_{12} A_{23}}{A_{01}^2 + A_{12}^2 + A_{23}^2} . \qquad (15)$$

From Equation 15 the cross-sensitivity of the fringe visibility of the RI sensor to air cavity 5 length changes $\Delta L_1$ and hence pressure and temperature changes can be calculated. In Fig. 11 the cross-sensitivity of the fringe visibility of the glass cavity and hence of the RI sensor is simulated for four different air cavity length and an air cavity change of $\Delta L_1$=6.2μm. As shown in Fig. 11 the fringe visibility of the RI sensor is sensitive to length changes of the air cavity. However, the sensitivity is relatively small and for a large air cavity length the cross-sensitivity can be neglected.

For the sensor of the invention several other applications are feasible. Different fluids have different refractive indices and can be distinguished using a refractive index sensor. Therefore, the distinction between liquid and gas, for example, can be made based on refractive index measurements. As the refractive index of a fluid varies with temperature and pressure, the p/T/RI sensor allows for a direct compensation of these effects. Together with temperature and pressure, the refractive index allows for a complete description of a flowing two-phase fluid. Besides the distinction of the phase (liquid or gas) in contact with the sensor, changes in chemical composition of the fluid can be detected. For example, the salinity of water changes the refractive index. Therefore, the salinity of a fluid can be monitored using the p/T/RI sensor. Using the capability of detecting the phase composition of a flowing multiphase fluid combined with the capability of detecting chemical changes within the fluid, the following applications are feasible:

- Oil and gas sector: Detecting and quantifying multiphase flow within a well. Feed zones of gas, water, condensate or crude oil can be distinguished and quantified.
- Geothermal sector: Detecting and quantifying two phase flow within a well. For high enthalpy wells, several parameters are important to know:

     a. Feed zones for gas and liquid
     b. Degassing of dissolved gases
     c. Fluid composition (e.g. salinity)

- Hydrogeology: Measuring and monitoring the salinity of water. For the supply of drinking water, it is important to monitor the salinity of water in order to detect a possible salinisation of drinking water reservoirs.
- Laboratory applications: Several applications using the capability of measuring different phase compositions and changes in the chemical composition of a fluid are feasible.

The invention is not limited to the embodiments described but may be varied in construction and detail. The sensor may be adapted to determine data concerning a fluid external to the cavity wall which includes oil and/or gas. The system may be adapted for use in the geothermal sector, in the hydrogeology sector, or in laboratory settings. According to the invention the external interface has a coating which has a reflectance or fluorescence property which changes with light wavelength, having a peak in a spectrum, and the processor is programmed to analyse across this spectrum to derive information about the external medium in contact with the coating.

## Claims

1. A sensor (1) comprising a light conductor (2) having a single mode fibre Bragg grating, a cavity (5), a transparent cavity end wall (4), a light emitter (101) for directing light through the light conductor (2), a light detector (104) for detecting reflected light, a processor, and a coating provided on an outer surface (8) of the cavity end wall (4), the refractive index of said coating changing in response to the presence of a fluid;
   wherein the processor is adapted to:

      analyse light reflected due to the single mode fibre Bragg grating and process said data to determine an indication of temperature;
      analyse light reflected from the end of the cavity (5) and process said data to determine an indication of pressure; and
      analyse light reflected from the coating on the outer surface (8) of said cavity end wall (4), and process said data to determine an indication of refractive index of a medium outside said cavity wall (4);

   wherein the coating has a reflectance or fluorescence property which changes with light wavelength, having a peak in a spectrum, and
   wherein the processor is adapted to analyse said spectrum to derive information about the external medium in contact with the coating.

2. A sensor as claimed in claim 1, wherein the processor is adapted to use at least one output to compensate another.

3. A sensor as claimed in claim 2, wherein pressure and temperature are used to compensate for variation in refractive index.

4. A sensor as claimed in any preceding claim, wherein the light conductor is an optical fibre.

5. A sensor as claimed in claim 4, wherein the cavity is formed by a cylindrical glass structure at the end of the fibre.

6. A sensor as claimed in claim 5, wherein the glass structure is a capillary.

7. A sensor as claimed in any preceding claim, wherein the cavity end wall is formed by a glass diaphragm or fibre section.

8. A sensor as claimed in any preceding claim, wherein the processor is adapted to perform low-pass filtering to quantify light reflected back from the end of the cavity.

9. A sensor as claimed in claim 8, wherein the processor is adapted to use said data to estimate cavity length, and to in turn use this to determine pressure.

10. A sensor as claimed in any preceding claim, wherein the processor is adapted to perform band-pass filtering to quantify light reflected back from the outside surface of the cavity wall.

11. A sensor as claimed in any preceding claim, wherein the processor is adapted to use said data to estimate refractive index, and to in turn use said estimation to determine properties of the medium outside said cavity end wall.

12. A sensor as claimed in any preceding claim, wherein the processor is adapted to use a normalised band pass fringe visibility function to compensate for variations in refractive index arising from light source variations.

13. A sensor as claimed in any preceding claim, wherein the processor is adapted to determine data concerning a fluid external to the cavity wall which includes water, and/or oil and/or a gas.

14. A sensor as claimed in any preceding claim, wherein the processor is adapted to derive information from light reflected back from the outside surface of the cavity wall.

15. A sensor as claimed in any preceding claim, where the light conductor is completely composed of fused silica.

16. A sensor as claimed in any preceding claim, wherein the processor is adapted to compensate for light losses within the light conductor due to beam divergence.


**Patentansprüche**

1. Ein Sensor (1), der Folgendes beinhaltet: einen Lichtleiter (2) mit einem Monomodus-Faser-Bragg-Gitter, einen Hohlraum (5), eine transparente Hohlraumstirnwand (4), einen Lichtsender (101) zum Richten von Licht durch den Lichtleiter (2), einen Lichtdetektor (104) zum Detektieren von reflektiertem Licht, einen Prozessor und eine auf einer Außenoberfläche (8) der Hohlraumstirnwand (4) bereitgestellte Beschichtung, wobei sich der Brechungsindex der Beschichtung als Reaktion auf das Vorliegen eines Fluids ändert,
wobei der Prozessor angepasst ist zum:

Analysieren von Licht, das aufgrund des Monomodus-Faser-Bragg-Gitters reflektiert wird, und Verarbeiten der Daten, um eine Temperaturangabe zu bestimmen;
Analysieren von Licht, das an der Stirn des Hohlraums (5) reflektiert wird, und Verarbeiten der Daten, um eine Druckangabe zu bestimmen; und
Analysieren von Licht, das an der Beschichtung auf der Außenoberfläche (8) der Hohlraumstirnwand (4) reflektiert wird; und
Verarbeiten der Daten, um eine Angabe eines Brechungsindex eines Mediums außerhalb der Hohlraumwand (4) zu bestimmen;

wobei die Beschichtung eine Reflexions- oder Fluoreszenzeigenschaft aufweist, die sich mit der Lichtwellenlänge ändert, eine Spitze in einem Spektrum aufweisend, und wobei der Prozessor angepasst ist, um das Spektrum zu analysieren, um Informationen über das externe Medium in Kontakt mit der Beschichtung abzuleiten.

2. Sensor gemäß Anspruch 1, wobei der Prozessor angepasst ist, um mindestens einen Ausgang zum Kompensieren eines anderen zu verwenden.

**3.** Sensor gemäß Anspruch 2, wobei Druck und Temperatur verwendet werden, um Schwankungen im Brechungsindex zu kompensieren.

**4.** Sensor gemäß einem der vorgehenden Ansprüche, wobei der Lichtleiter eine optische Faser ist.

**5.** Sensor gemäß Anspruch 4, wobei der Hohlraum durch eine zylindrische Glasstruktur am Ende der Faser gebildet ist.

**6.** Sensor gemäß Anspruch 5, wobei die Glasstruktur eine Kapillare ist.

**7.** Sensor gemäß einem der vorhergehenden Ansprüche, wobei die Hohlraumstirnwand durch eine Glasblende oder einen Faserabschnitt gebildet ist.

**8.** Sensor gemäß einem der vorhergehenden Ansprüche, wobei der Prozessor angepasst ist, um eine Tiefpassfilterung durchzuführen, um das vom Ende des Hohlraums zurückreflektierte Licht zu quantifizieren.

**9.** Sensor gemäß Anspruch 8, wobei der Prozessor angepasst ist, um die Daten zum Schätzen einer Hohlraumlänge zu verwenden und um diese wiederum zum Bestimmen eines Drucks zu verwenden.

**10.** Sensor gemäß einem der vorhergehenden Ansprüche, wobei der Prozessor angepasst ist, um eine Bandpassfilterung durchzuführen, um das von der Außenoberfläche der Hohlraumwand zurückreflektierte Licht zu quantifizieren.

**11.** Sensor gemäß einem der vorhergehenden Ansprüche, wobei der Prozessor angepasst ist, um die Daten zum Schätzen des Brechungsindex zu verwenden und um diese Schätzung wiederum zum Bestimmen der Eigenschaften des Mediums außerhalb der Hohlraumstirnwand zu verwenden.

**12.** Sensor gemäß einem der vorhergehenden Ansprüche, wobei der Prozessor angepasst ist, um eine normierte Bandpass-Streifen-Sichtbarkeitsfunktion zu verwenden, um Schwankungen im Brechungsindex, die sich aus Lichtquellenschwankungen ergeben, zu kompensieren.

**13.** Sensor gemäß einem der vorhergehenden Ansprüche, wobei der Prozessor angepasst ist, um Daten bezüglich eines Fluids außerhalb der Hohlraumwand, das Wasser und/oder Öl und/oder ein Gas umfasst, zu bestimmen.

**14.** Sensor gemäß einem der vorhergehenden Ansprüche, wobei der Prozessor angepasst ist, um Informationen aus Licht, das von der Außenoberfläche der Hohlraumwand zurückreflektiert wird, abzuleiten.

**15.** Sensor gemäß einem der vorhergehenden Ansprüche, wobei der Lichtleiter vollständig aus Quarzglas besteht.

**16.** Sensor gemäß einem der vorhergehenden Ansprüche, wobei der Prozessor angepasst ist, um Lichtverluste innerhalb des Lichtleiters aufgrund von Strahldivergenz zu kompensieren.

**Revendications**

**1.** Un capteur (1) comprenant un conducteur de lumière (2) présentant un réseau de Bragg de fibre monomode, une cavité (5), une paroi d'extrémité de cavité (4) transparente, un émetteur de lumière (101) pour diriger de la lumière à travers le conducteur de lumière (2), un détecteur de lumière (104) pour détecter de la lumière réfléchie, un processeur, et un revêtement fourni sur une surface externe (8) de la paroi d'extrémité de cavité (4), l'indice de réfraction dudit revêtement changeant en réponse à la présence d'un fluide ;
dans lequel le processeur est conçu pour :

analyser de la lumière réfléchie du fait du réseau de Bragg de fibre monomode et traiter lesdites données afin de déterminer une indication de température ;
analyser de la lumière réfléchie depuis l'extrémité de la cavité (5) et traiter lesdites données afin de déterminer une indication de pression ; et
analyser de la lumière réfléchie depuis le revêtement sur la surface externe (8) de ladite paroi d'extrémité de cavité (4), et traiter lesdites données afin de déterminer une indication d'indice de réfraction d'un milieu à l'extérieur de ladite paroi de cavité (4) ;

dans lequel le revêtement a une propriété de réflectance ou de fluorescence qui change avec la longueur d'onde de la lumière, présentant un pic dans un spectre, et dans lequel le processeur est conçu pour analyser ledit spectre afin de dériver des informations sur le milieu externe en contact avec le revêtement.

2. Un capteur tel que revendiqué dans la revendication 1, dans lequel le processeur est conçu pour utiliser au moins une sortie afin d'en compenser une autre.

3. Un capteur tel que revendiqué dans la revendication 2, dans lequel la pression et la température sont utilisées afin de compenser une variation dans l'indice de réfraction.

4. Un capteur tel que revendiqué dans n'importe quelle revendication précédente, dans lequel le conducteur de lumière est une fibre optique.

5. Un capteur tel que revendiqué dans la revendication 4, dans lequel la cavité est formée par une structure en verre cylindrique à l'extrémité de la fibre.

6. Un capteur tel que revendiqué dans la revendication 5, dans lequel la structure en verre est un capillaire.

7. Un capteur tel que revendiqué dans n'importe quelle revendication précédente, dans lequel la paroi d'extrémité de cavité est formée par un diaphragme ou une section de fibre en verre.

8. Un capteur tel que revendiqué dans n'importe quelle revendication précédente, dans lequel le processeur est conçu pour effectuer un filtrage passe-bas afin de quantifier de la lumière réfléchie en retour depuis l'extrémité de la cavité.

9. Un capteur tel que revendiqué dans la revendication 8, dans lequel le processeur est conçu pour utiliser lesdites données afin d'estimer une longueur de cavité, et afin d'utiliser à son tour cela pour déterminer une pression.

10. Un capteur tel que revendiqué dans n'importe quelle revendication précédente, dans lequel le processeur est conçu pour effectuer un filtrage passe-bande afin de quantifier de la lumière réfléchie en retour depuis la surface extérieure de la paroi de cavité.

11. Un capteur tel que revendiqué dans n'importe quelle revendication précédente, dans lequel le processeur est conçu pour utiliser lesdites données afin d'estimer un indice de réfraction, et pour utiliser à son tour ladite estimation afin de déterminer des propriétés du milieu à l'extérieur de ladite paroi d'extrémité de cavité.

12. Un capteur tel que revendiqué dans n'importe quelle revendication précédente, dans lequel le processeur est conçu pour utiliser une fonction de visibilité des franges passe-bande normalisée afin de compenser des variations d'indice de réfraction résultant de variations de source de lumière.

13. Un capteur tel que revendiqué dans n'importe quelle revendication précédente, dans lequel le processeur est conçu pour déterminer des données concernant un fluide externe par rapport à la paroi de cavité qui inclut de l'eau, et/ou de l'huile et/ou un gaz.

14. Un capteur tel que revendiqué dans n'importe quelle revendication précédente, dans lequel le processeur est conçu pour dériver des informations à partir de lumière réfléchie en retour depuis la surface extérieure de la paroi de cavité.

15. Un capteur tel que revendiqué dans n'importe quelle revendication précédente, où le conducteur de lumière est complètement composé de silice fondue.

16. Un capteur tel que revendiqué dans n'importe quelle revendication précédente, dans lequel le processeur est conçu pour compenser des pertes de lumière au sein du conducteur de lumière du fait d'une divergence de faisceau.

Fig.1

(a)

51,
200 μm Fibre

50,
Glass capillary

55

Splice

(b)

Cleave

(c)

50

55

SM fibre
52

(d)

50

51

52

Splice

(e)

55

51

52

Cleave

(f)

Connector Ferrule

52

50

51

Polishing paper 60

Fig.2

Fig.3

200

Obtained sensor
spectrum

201

203

LP-Filter

204

BP-Filter

202

Calculating Bragg
wavelenght

→ Temperature

205

Calculating air
cavity lenght L₁

Pressure,
Temperature

206

Calculating air
reflectivity A₂₃

Refractive
Index

Fig.4

Fig. 5

Fig. 6

Fig. 7

Fig. 8

Fig.9

300 —

```
┌──────────────┐          ┌──────────────┐
│ Obtained     │─────○────│ Calculating  │──→  Temperature
│ sensor       │     │    │ Bragg        │
│ spectrum     │     │    │ wavelenght   │
└──────────────┘     │    └──────────────┘
                     │
                     ○──→ ┌──────────┐    ┌──────────────┐
                     │    │ LP-Filter│──→ │ Calculating  │──→  Pressure,
                     │    └──────────┘    │ air cavity   │     Temperature
                     │                    │ lenght L₁    │
                     │                    └──────────────┘
                     │
                     │──→ ┌──────────────┐
                     │    │ Calculating  │────────┐
                     │    │ Offset       │        │
                     │    └──────────────┘        │
                     │                            ↓
                     │──→ ┌──────────┐      + ┌──────────────┐
                          │ BP-Filter│────→   │ Calculating  │──→  Refractive
                          └──────────┘        │ air Fringe   │     Index
                                              │ Visibility   │
                                              └──────────────┘
```

Fig.10

Fig.11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4929049 A
- DE 4125036 C1
- WO 2011120147 A1
- CN 202041465 U

**Non-patent literature cited in the description**

- **Y. RAO.** In-Line Fiber-Optic Fabry-Perot Refractive-Index Tip Sensors. *Proc. of SPIE,* 2009, vol. 7133, 71332K
- **Z. RAN ; Y. RAO ; J. ZHANG ; Z. LIU ; B. XU.** A Miniature Fiber-Optic Refractive-Index Sensor Based on Laser-Machined Fabry-Perot Interferometer Tip. *JOURNAL OF LIGHTWAVE TECHNOLOGY,* 2009, vol. 27, 5426-5429
- **H.J. PATRICK ; A.D. KERSEY ; F. BUCHOLTZ.** Analysis of the Response of Long Period Fiber Gratings to External Index of Refraction. *JOURNAL OF LIGHTWAVE TECHNOLOGY,* 1998, vol. 16, 1606-1612
- **Y. JUNG ; S. KIM ; D. LEE ; K. OH.** Compact three segmented multimode fibre modal interferometer for high sensitivity refractive-index measurement. *MEASUREMENT SCIENCE AND TECHNOLOGY,* 2006, vol. 17, 1129-1133
- **J.-H. CHEN ; J.-R. ZHAO ; X.-. HUANG ; Z.-J. HUANG.** Extrinsic fiber-optic Fabry-Perot interferometer sensor for refractive index measurement of optical glass. *APPLIED OPTICS,* 2010, vol. 49, 5592-5596
- **J.-R. ZHAO ; X.-G. HUANG ; W.-X. HE ; J.-H. CHEN.** High-Resolution and Temperature-Insensitive Fiber Optic Refractive Index Sensor Based on Fresnel Reflection Modulated by Fabry-Perot Interference. *JOURNAL OF LIGHTWAVE TECHNOLOGY,* 2010, vol. 28, 2799-2803
- **D. MONZON-HERNANDEZ ; J. VILLATORO.** High-resolution refractive index sensing by means of a multiple-peak surface plasmon resonance optical fiber sensor. *Sensors and Actuators B,* 2006, vol. 115, 227-231
- **W. LIANG ; Y. HUANG ; Y. XU ; R. K. LEE ; A. YARIV.** Highly sensitive fiber Bragg grating refractive index sensors. *APPLIED PHYSICS LETTERS,* 2005, vol. 86, 151122.1-151122.3
- **W. CHANG WONG ; C.C. CHAN ; L.H. CHEN ; Z.Q. TOU ; K.C. LEONG.** Highly sensitive miniature photonic crystal fiber refractive index sensor based on mode field excitation. *OPTICS LETTERS,* 2011, vol. 36, 1731-1733
- **R. JHA ; J. VILLATORO ; G. BADENES.** Ultrastable in reflection photonic crystal fiber modal interferometer for accurate refractive index sensing. *APPLIED PHYSICS LETTERS,* 2008, vol. 93, 191106.1-191106.3
- **V. BHATIA.** Applications of long-period gratings to single and multi-parameter sensing. *OPTICS EXPRESS,* 1999, vol. 4, 457-466
- **H.Y. CHOI ; G. MUDHANA ; K. S. PARK ; U. PAEK ; B.H. LEE.** Cross-talk free and ultra-compact fiber optic sensor for simultaneous measurement of temperature and refractive index. *OPTICS EXPRESS,* 2009, vol. 18, 141-149
- **C.R. LIAO ; Y. WANG ; D.N. WANG ; M.W. YANG.** Fiber In-Line Mach-Zehnder Interferometer Embedded in FBG for Simultaneous Refractive Index and Temperature Measurement. *IEEE PHOTONICS TECHNOLOGY LETTERS,* 2010, vol. 22, 1686-1688
- **C. ZHAO ; X. YANG ; M. DEMOKAN ; W. JIN.** Simultaneous Temperature and Refractive Index Measurements Using a 3° Slanted Multimode Fiber Bragg Grating. *JOURNAL OF LIGHTWAVE TECHNOLOGY,* 2006, vol. 24, 879-883
- **D.W. KIM ; F. SHEN ; X. CHEN ; ANBO WANG.** Simultaneous measurement of refractive index and temperature based on a reflection-mode long-period grating and an intrinsic Fabry-Perot interferometer sensor. *OPTICS LETTERS,* 2005, vol. 30, 3000-3002
- **B.A.L. GWANDU ; X. SHU ; T.D.P. ALLSOP ; W. ZHANG ; L. ZHANG ; D.J. WEBB ; I. BENNION.** Simultaneous refractive index and temperature measurement using a cascaded long-period grating device. *Proc. of IEEE Sensors 2002,* 2002, 1032-1035
- **A.D. KERSEY et al.** Fiber Grating Sensors. *J. Lightw. Technol.,* 1997, vol. 15, 1442-1463
- Beschreibung und Auswertungsmethodik von Multi-Fabry-Perot-Systemen. **D. SCHULZ.** unpublished thesis (PhD). Gerhard-Mercator-Universität Duisburg, 2001

- **J. XU ; X. WANG ; K.L COOPER ; G.R. PICKRELL ; A. WANG.** Miniature fiber optic pressure and temperature sensors. *Fiber Optic Sensors Technology and Applications IV, Proc. of SPIE,* 2005, vol. 6004
- **Y. ZHU ; A. WANG.** Miniature Fiber-Optic Pressure Sensor. *IEEE Photonics Technology Letters,* 2005, vol. 17, 447-449
- **K.K. CHIN et al.** Interference of Fiber-Coupled Gaussian Beam Multiply Reflected Between Two Planar Interfaces. *IEEE Photonics Technology Letters,* 2007, vol. 19, 1643-1645
- **E. CIBULA et al.** Miniature fiber optic pressure sensor for medical application. *IEEE Sensors,* 2002, 711-714
- **D. MARCUSE.** Loss analysis of single-mode fiber splices. *Bell Syst. Tech. J.,* May 1977, vol. 56, 703-718
- **A. MAJUMDAR ; H. HUANG.** Development of an in-fiber white-light interferometric distance sensor for absolute measurement of arbitrary small distances. *Applied Optics,* 2008, vol. 47, 2821-2828
- Fibre optic pressure and temperature sensor for geothermal wells. **BREMER K et al.** Sensors, 2010 IEEE. IEEE, 01 November 2010, 538-541
- In-line fiber Fabry-Perot refractive-index tip sensor based on endlessly photonic crystal fiber. **RAO Y J et al.** ensors and Actuators A. Elsevier Sequoia S.A, 04 November 2008, vol. 148, 33-38